# EUROPÄISCHE PATENTSCHRIFT

(11) **EP 1 642 180 B1**
(45) Veröffentlichungstag und Bekanntmachung des Hinweises auf die Patenterteilung: **12.03.2008**
(21) Anmeldenummer: 04762338.4
(22) Anmeldetag: 02.07.2004
(51) Int. Cl.: G05B 19/4097

(54) **VERFAHREN UND VORRICHTUNG ZUM FRÄSEN VON FREIFORMFLÄCHEN**
METHOD AND DEVICE FOR MILLING FREEFORM SURFACES
PROCEDE ET DISPOSITIF POUR FRAISER DES SURFACES DE FORME LIBRE

(30) Priorität: 08.07.2003 DE 10330846
(43) Veröffentlichungstag der Anmeldung: 05.04.2006
(73) Patentinhaber: MTU Aero Engines GmbH, 80995 München (DE)
(72) Erfinder: GLÄSSER, Arndt, 85221 Dachau (DE)
(86) Internationale Anmeldenummer: PCT/DE2004/001412
(87) Internationale Veröffentlichungsnummer: WO 2005/006093

(56) Entgegenhaltungen:
- EP-A- 0 706 103
- EP-A- 1 235 126
- DE-A1- 4 310 126
- FLEISIG R V ET AL: "A constant feed and reduced angular acceleration interpolation algorithm for multi-axis machining" COMPUTER AIDED DESIGN, ELSEVIER PUBLISHERS BV., BARKING, GB, Bd. 33, Nr. 1, Januar 2001 (2001-01), Seiten 1-15, XP004227221 ISSN: 0010-4485

## Beschreibung

Die Erfindung betrifft ein Verfahren zum Fräsen von Freiformflächen nach dem Oberbegriff des Patentanspruchs 1. Des weiteren betrifft die Erfindung eine Vorrichtung zum Fräsen von Freiformflächen nach dem Oberbegriff des Patentanspruchs 3.

Die hier vorliegende Erfindung betrifft das Gebiet der Frästechnik, insbesondere das HSC-Fräsen (High Speed Cutting Fräsen), welches auch als HPC-Fräsen (High Performance Cutting Fräsen) bezeichnet wird.

Beim Fräsen von Freiformflächen wird ein Werkzeug, ein sogenannter Fräser, relativ zum Werkstück bewegt. Die Bewegung des Werkzeugs relativ zum Werkstück wird durch Werkzeugbahnen bzw. Fräsbahnen beschrieben. Nach dem Stand der Technik werden derartige Werkzeugbahnen bzw. Fräsbahnen über Stützpunkte definiert bzw. programmiert. Zur Gewährleistung einer möglichst guten Qualität der zu fräsenden Freiformfläche muss der Abstand zwischen den einzelnen Stützpunkten möglichst gering sein. Bei einem geringen Abstand der Stützpunkte ist die Anzahl der Stützpunkte pro Fräsbahn groß. Je größer die Anzahl der Stützpunkte, desto größer ist auch das von einer Steuerungseinrichtung der Fräsmaschine zu verarbeitende Datenvolumen. Je größer das Datenvolumen, desto größer sind demnach die Anforderungen an die Verarbeitungsgeschwindigkeit der Steuerungseinrichtung der Fräsmaschine. Ist nämlich die Verarbeitungsgeschwindigkeit der Steuerungseinrichtung beschränkt, so kann durchaus der Fall auftreten, dass bei zu großer Anzahl der Stützpunkte und damit bei einer zu hohen zu verarbeitenden Datenmenge die Steuerungseinrichtung der Fräsmaschine die anfallende Datenmenge nicht mehr in einem solchen Zeitfenster bearbeiten kann, dass eine kontinuierliche Bewegung des Fräswerkzeugs gewährleistet ist. In diesem Fall erfolgt die Bewegung des Fräswerkzeugs relativ zum Werkstück rückartig. Dies muss aus Qualitätsgründen vermieden werden. Je größer jedoch der Abstand der Stützpunkte gewählt wird, desto facettierter wird die zu fräsende Freiformfläche. Demnach ergeben sich auch bei Verringerung der Stützpunktanzahl und damit bei Vergrößerung des Stützpunktabstands Qualitätsprobleme.

EP 0 706 103 A1 offenbart ein Verfahren zur numerischen Bahnsteuerung von Werkzeugmaschinen, bei dem eine zu generierende Werkzeugbahn über Basissplines (NURBS) angenähert wird. Die Werkzeugbahn wird somit durch standardisierte Kurven im Raum generiert. Zur Steuerung der Maschine werden diese Basissplines nun in Polynome gewandelt. Hierbei liegt die Bahn dann in Form von transformierten Polynomen im Raum (dreidimensional) vor.

EP 1 235 126 A1 zeigt ebenfalls ein Verfahren zur Steuerung von CNC-Maschinen, wobei auch hier Basissplines (NURBS) als kleinste Datenvolumen zur Steuerung verwendet werden, indem diese entsprechend nacheinander ausgeführt werden.

Hiervon ausgehend liegt der vorliegenden Erfindung das Problem zu Grunde, ein neuartiges Verfahren zum Fräsen von Freiformflächen sowie eine entsprechende Vorrichtung zu schaffen.

Dieses Problem wird dadurch gelöst, dass das eingangs genannte Verfahren zum Fräsen von Freiformflächen durch die Merkmale des kennzeichnenden Teils des Patentanspruchs 1 weitergebildet ist.

Die Stützpunkte der oder jeder Werkzeugbahn sind entweder in Werkstückkoordinaten oder in Maschinenkoordinaten. Nachfolgend wird unabhängig von der zu bearbeitenden Freiformfläche die Werkzeugbahn aus 6 oder 5 Splines generiert, abhängig davon, ob die Stützpunkte in Werksstückkoordinaten oder Maschinenkoordinaten definiert sind.

Durch die hier vorliegende Erfindung wird das von der Steuerungseinrichtung der Fräsmaschine zu verarbeitende Datenvolumen auch dann reduziert, wenn ein geringer Stützpunktabstand und damit eine hohe Anzahl von Stützpunkten bei der Programmierung der oder jeder Werkzeugbahn gewählt wird. Durch die Stützpunkte werden Splines gelegt, wobei für jede zur Steuerung benötigte Koordinate ein von den jeweils restlichen Koordinaten unabhängiger Spline erzeugt wird. Da Splines einen immer stetigen Verlauf aufweisen, ergibt sich auch eine Qualitätsverbesserung für die zu fräsende Freiformfläche.

Die erfindungsgemäße Vorrichtung ist durch die Merkmale des Patentanspruchs 3 gekennzeichnet.

Bevorzugte Weiterbildungen der Erfindung ergeben sich aus den abhängigen Unteransprüchen und der nachfolgenden Beschreibung.

Ausführungsbeispiele der Erfindung werden, ohne hierauf beschränkt zu sein, an Hand der Zeichnung näher erläutert. In der Zeichnung zeigt:
- Fig. 1:: eine stark schematisierte Darstellung einer über Stützpunkte definierten Werkzeugbahn im Sinne des Standes der Technik;
- Fig. 2:: eine stark schematisierte Darstellung einer über Stützpunkte definierten Werkzeugbahn zusammen mit einem entlang der Stützpunkte gelegten Spline im Sinne der Erfindung; und
- Fig. 3:: ein stark schematisiertes Blockschaltbild einer erfindungsgemäßen Vorrichtung zum Fräsen von Freiformflächen.

Nachfolgend wird die hier vorliegende Erfindung unter Bezugnahme auf die Figuren in größerem Detail erläutert. Bevor jedoch die Details des erfindungsgemäßen Verfahrens sowie der erfindungsgemäßen Vorrichtung dargestellt werden, sollen nachfolgend einige Begriffe definiert werden, auf die später Bezug genommen wird.

Bei der Fräsbearbeitung eines zu bearbeitenden Werkstücks soll sich an der Oberfläche des Werkstücks eine gewünschte dreidimensionale Geometrie einstellen. Diese gewünschte dreidimensionale Geometrie an der Oberfläche des Werkstücks wird auch als Freiformfläche bezeichnet.

Die Fräsbearbeitung eines Werkstücks zur Ausbildung einer definierten dreidimensionalen Freiformfläche erfolgt mithilfe eines sogenannten 5-Achsfräsens. Beim 5-Achsfräsen kann ein Werkzeug, ein sogenannter Fräser, in fünf Achsen relativ zum zu bearbeitenden Werkstück bewegt werden. Drei Achsen dienen der linearen Relativbewegung des Werkzeugs relativ zum Werkstück, so dass jeder Punkt im Raum angefahren werden kann. Zusätzlich zu dieser linearen Bewegung entlang der sogenannten Linearachsen ist das Werkzeug zur Realisierung von Hinterschneidungen auch um eine Schwenkachse sowie eine Kippachse bewegbar. Entlang der Schwenkachse sowie der Kippachse werden rotatorische Bewegungen des Werkzeugs ermöglicht. Hierdurch ist es möglich, dass alle Punkte im Raum ohne Kollision angefahren werden können. Die Schwenkachse sowie die Kippachse werden häufig auch allgemein mit Rundachsen bezeichnet.

Zur Bearbeitung des Werkstücks wird das Werkzeug bzw. der Fräser relativ zum Werkstück bewegt. Die Bewegung des Werkzeugs bzw. Fräsers relativ zum Werkstück wird durch Werkzeugbahnen bzw. Fräsbahnen beschrieben. Die Werkzeugbahnen bzw. Fräsbahnen beschreiben die Position einer Werkzeugspitze bzw. eines Werkzeugbezugspunkt relativ zum Werkstück. Die Werkzeugbahnen werden in einem CAD/CAM-System in Form von Stützpunkten definiert.

Ausgehend von der Werkzeugspitze bzw. dem Werkzeugbezugspunkt erstreckt sich ein Vektor entlang einer Werkzeugachse bzw. eines Werkzeugschaftes des Werkzeugs bzw. Fräsers. Dieser Vektor entlang der Werkzeugachse ausgehend von der Werkzeugspitze in Richtung des Werkzeugschaftes bezeichnet man als Werkzeugvektor.

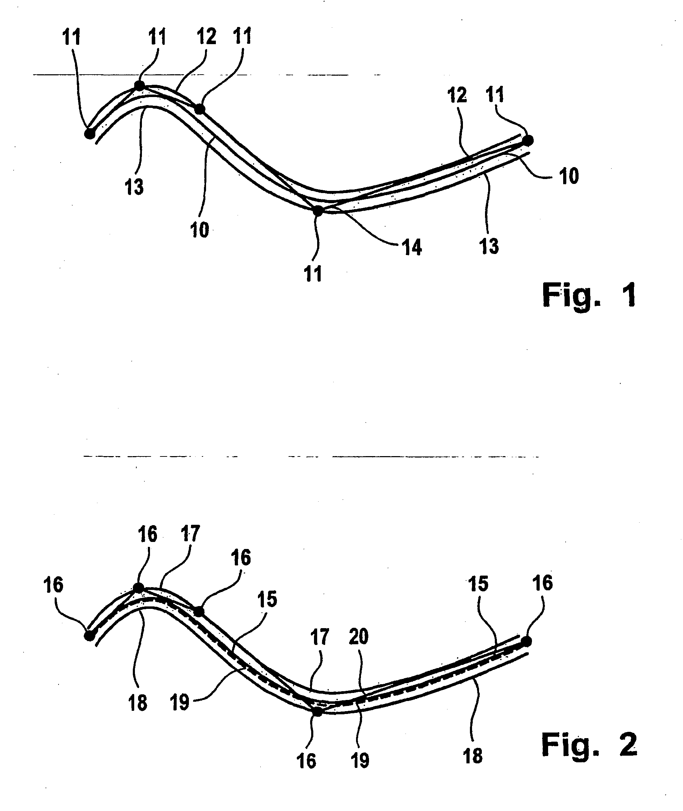

Fig. 1 zeigt stark schematisiert die Vorgehensweise bei der Programmierung von Werkzeugbahnen bzw. Fräsbahnen im Sinne des Standes der Technik. So zeigt Fig. 1 eine zu fräsende Kontur 10 einer Freiformfläche bzw. eines Werkstücks. Zur Erzeugung dieser Freiformfläche bzw. der Kontur 10 muss ein Fräser relativ zum Werkstück bewegt werden. Die Werkzeugbahn des Fräsers wird über Stützpunkte 11 definiert, wobei die Stützpunkte 11 innerhalb von Toleranzgrenzen 12, 13 für die Kontur 10 liegen. Nach dem Stand der Technik werden die Stützpunkte 11 in einer als CAD/CAM-System ausgebildeten Programmiereinrichtung definiert. Das CAD/CAM-System gibt nach dem Stand der Technik die Werkzeugbahn bzw. Fräsbahn 14, die durch geradlinige Verbindung zwischen benachbarten Stützpunkten 11 gebildet wird, in Form von Linearsätzen aus. Diese Linearsätze werden dann nach dem Stand der Technik von einer Steuerungseinrichtung einer Fräsmaschine weiterverarbeitet.

Fig. 2 verdeutlicht das erfindungsgemäße Verfahren zum Fräsen von Freiformflächen. So zeigt Fig. 2 wiederum eine Kontur 15 einer zu fräsenden Freiformfläche. Die Stützpunkte 16 für die Werkzeugbahn sind dabei entweder in Werkstückkoordinaten oder in Maschinenkoordinaten definiert bzw. vorprogrammiert. Die Stützpunkte 16 werden dabei wiederum innerhalb von Toleranzgrenzen 17, 18 für die Kontur 15 der zu fräsenden Freiformfläche definiert. Im Sinne der Erfindung werden in Abhängigkeit der Stützpunkte 16 für die Werkzeugbahn Splines 19 generiert. Die Splines 19 (in Fig. 2 gestrichelt dargestellt) verfügen über einen insgesamt stetigen Verlauf und weisen demnach im Unterschied zu einer geradlinigen Verbindung 20 zwischen den einzelnen Stützpunkten 16 keinerlei Unstetigkeitsstellen auf. Jeder Spline 19 wird dann an eine Steuerungseinrichtung der Fräsmaschine ausgegeben. In Abhängigkeit jeden Splines wird die Bewegung des Werkzeugs bzw. Fräsers entlang der oder jeder Werkzeugbahn gesteuert.

Es liegt im Sinne der hier vorliegenden Erfindung, die Stützpunkte 16 für die oder jede Werkzeugbahn entweder in Werkstückkoordinaten oder in Maschinenkoordinaten zu definieren. Erfolgt die Definition der Stützpunkte in Werkstückkoordinaten, so werden für jeden Stützpunkt sechs Koordinaten festgelegt. Erfolgt hingegen die Definition der Stützpunkte 16 in Maschinenkoordinaten, so werden für jeden Stützpunkt fünf Koordinaten definiert.

Für eine Werkzeugbahn, die über Stützpunkte 16 in einer CAD/CAM-Vorrichtung programmiert wurde, wird nun für jede Koordinate der Werkzeugbahn jeweils ein Spline festgelegt. In dem Fall, in dem die Stützpunkte in Werkstückkoordinaten definiert werden, werden somit für jede Werkzeugbahn insgesamt sechs Splines erzeugt, da für eine Definition der Stützpunkte in Werkstückkoordinaten je Stützpunkt sechs Koordinaten erforderlich sind. In dem Fall, in dem die Stützpunkte in Maschinenkoordinaten definiert werden, werden für jede Werkzeugbahn insgesamt fünf Splines erzeugt.

Die Erzeugung der Splines erfolgt über ein aus der numerischen Mathematik bekanntes Interpolationsverfahren. Bzgl. der mathematischen Details wird auf die einschlägige Literatur verwiesen. Bei der Erzeugung der fünf bzw. sechs Splines je Werkzeugbahn ist von Bedeutung, dass die Interpolationsparameter für alle Splines der jeweiligen Werkzeugbahn gleich gewählt werden. Demnach werden alle fünf bzw. sechs Splines einer Werkzeugbahn entweder über Bahnlänge oder Fräszeit definiert. Sind für alle Splines die Interpolationsparameter gleich, so sind die Splines einer jeweiligen Werkzeugbahn synchronisiert.

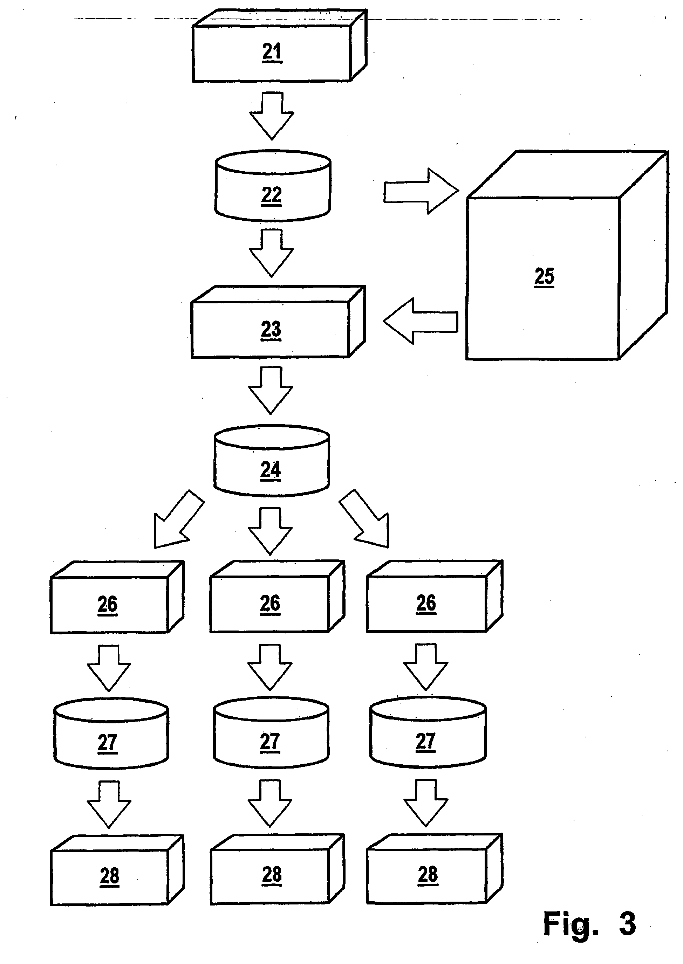

Fig. 3 zeigt ein stark schematisiertes Blockschaltbild einer erfindungsgemäßen Vorrichtung zum Fräsen von Freiformflächen. Die erfindungsgemäße Vorrichtung umfasst im gezeigten Ausführungsbeispiel eine Programmiereinrichtung 21 zur Programmierung mindestens einer Werkzeugbahn bzw. Fräsbahn eines Fräswerkzeugs über Stützpunkte. Die Stützpunkte werden, wie bereits oben erwähnt, entweder in Maschinenkoordinaten oder in Werkstückkoordinaten programmiert.

Bei der ersten Programmiereinrichtung 21 handelt es sich um ein CAD/CAM-System. Das CAD/CAM-System erzeugt ein sogenanntes APT (Automatic Programming Tool)-File 22, wobei ein APT-Prozessor 23 aus dem APT-File 22 ein maschinenunabhängiges Steuerungsfile 24 für die Fräsbearbeitung des Werkstücks erzeugt. Aus dem maschinenunabhängigen Steuerungsfile 24 werden mithilfe sogenannter Postprozessoren 26 sogenannte Steuerungs- bzw. NC-Files 27 erzeugt, die maschinenabhängig sind. Diese Steuerungs- bzw. NC-Files 27 werden Steuerungseinrichtungen 28 bereitgestellt, welche die einzelnen Bewegungsachsen der Fräsmaschine bzw. NC-Maschine steuern.

Der Programmiereinrichtung 21 sind Mittel 25 zugeordnet, um für die Werkzeugbahn die Splines in Abhängigkeit von den Stützpunkten zu erzeugen. Die Erzeugung der Splines für die Werkzeugbahnen erfolgt auf die oben beschriebene Art und Weise. Die von den Mitteln 25 als Funktion der Stützpunkte erzeugten Splines werden im Ausführungsbeispiel der Fig. 3 an den APT-Prozessor 23 übergeben, der die entsprechenden Splinedaten im maschinenunabhängigen Steuerungsfile 24 den Postprozessoren 26 übergibt.

Die Postprozessoren 26 stellen den Steuerungseinrichtungen 28 die Splines in den maschinenabhängigen Steuerungsfiles 27 im Polynomformat zur Verfügung. Die Steuerungseinrichtungen 28 steuern die Bewegung des Werkzeugs entlang der Werkzeugbahnen auf Basis der entsprechenden Splines. Durch die Bereitstellung der Splines im Polynomformat ist gewährleistet, dass die Steuerungseinrichtungen 28 der Fräsmaschine bzw. NC-Maschine die Splines problemlos weiterverarbeiten und zur Steuerung des Fräswerkzeugs verwenden können.

Mithilfe des erfindungsgemäßen Verfahrens sowie der erfindungsgemäßen Vorrichtung lässt sich das Fräsen von Freiformflächen erheblich verbessern. Das von der Fräsmaschine zu verarbeitende Datenvolumen wird erheblich reduziert. Die Splines gewährleisten krümmungsstetige Werkzeugbahnen, wodurch sich die Oberflächenqualität der herzustellenden Freiformflächen erheblich verbessern lässt. Die Fräsmaschine wird weniger stark zu Schwingungen angeregt und demnach unterliegen auch die Fräswerkzeuge einem geringen Verschleiß.

Die erfindungsgemäße Vorrichtung sowie das erfindungsgemäße Verfahren eigenen sich besonders für die Fräsbearbeitung von rotationssymmetrischen Gasturbinenbauteilen mit integraler Beschaufelung, d.h. von sogenannten Blisks (Bladed Disks) oder Blings (Bladed Rings).

## Patentansprüche

1. Verfahren zum Fräsen von Freiformflächen an Werkstücken auf einer Fräsvorrichtung bzw. einer Fräsmaschine, insbesondere zum 5 -Achsfräsen, wobei ein Werkstück von einem Werkzeug der Fräsmaschine derart gefräst wird, dass sich eine gewünschte Freiformfläche ergibt und das Werkzeug zum Fräsen entlang einer durch Splines definierten Werkzeugbahn relativ zum Werkstück bewegt wird, **dadurch gekennzeichnet, dass** die Splines aus in CAD/CAM- Systemen in Werkstückkoordinaten oder in Maschinenkoordinaten gespeicherten Stützpunkten errechnet werden und unabhängig von der zu bearbeitenden Freiformfläche die Werkzeugbahn aus 6 Splines generiert wird, wenn die Stützpunkte in Werkstückkoordinaten definiert sind, und aus 5 Splines generiert werden, wenn die Stützpunkte in Maschinenkoordinaten definiert sind, wobei für jede Koordinate ein unabhängiger Spline erzeugt wird.

2. Verfahren nach Anspruch 1, **dadurch gekennzeichnet, dass** für jede Werkzeugbahn die Interpolationsparameter für alle Splines der jeweiligen Werkzeugbahn gleich sind, so dass alle Splines einer jeweiligen Werkzeugbahn synchronisiert sind.

3. Vorrichtung zum Fräsen von Freiformflächen an Werkstücken, insbesondere 5 - Achsfräsvorrichtung, wobei ein Werkzeug ein Werkstück derart fräst, dass sich eine gewünschte Freiformfläche ergibt, mit einer Programmiereinrichtung (21) zur Programmierung mindestens einer Werkzeugbahn beziehungsweise Fräserbahn und mit mindestens einer Steuerungseinrichtung (28) zur Steuerung der Bewegung des Werkzeugs entlang einer durch Splines definierten Werkzeugbahn relativ zum Werkstück, **dadurch gekennzeichnet, dass** die Programmiereinrichtung (21) als CAD/CAM-System ausgebildet ist und die der Programmiereinrichtung (21) zugeordneten Mittel (25) die Splines derart aus in dem CAD/CAM-System in Werkstückkoordinaten oder Maschinenkoordinaten gespeicherten Stützpunkten errechnen, dass die Mittel (25), unabhängig von der zu bearbeitenden Freiformfläche die Werkzeugbahn aus 6 Splines generieren, wenn die Stützpunkte in Werkstückkoordinaten definiert sind, und aus 5 Splines generieren, wenn die Stützpunkte in Maschinenkoordinaten definiert sind, wobei für jede Koordinate ein unabhängiger Spline erzeugt wird und das CAD/CAM-System mindestens ein APT-File (22) erzeugt, welches von mindestens einem nachgeschaltenen Postprozessor (26) in mindestens ein von der oder jeder Steuerungseinrichtung (28) ausführbares Steuerungsfile (27) überführbar ist, und wobei die Oder jede Steuerungseinrichtung (28) die Bewegung des Werkzeugs entlang der oder jeder Werkzeugbahn auf Basis der entsprechenden Splines steuert.

4. Vorrichtung nach Anspruch 3, **dadurch gekennzeichnet, dass** die der Programmiereinrichtung (21) zugeordneten Mitteln (25) die Splines an einen APT-Prozessor (23) übergeben, der diese Splines an den oder jeden Postprozessor (26) übergibt, wobei der oder jeder Postprozessor (26) die Splines der oder jeder Steuerungseinrichtung (28) im Polynomformat bereitstellt.

## Claims

1. A method for milling freeform surfaces on workpieces on a milling device or a milling machine, in particular for 5-axis milling, wherein a workpiece is milled by a tool of the milling machine in such a way that a desired freeform surface results and the tool for milling is moved along a tool path that is defined by splines relative to the workpiece, **characterised in that** the splines are calculated from support points stored in CAD-CAM systems in workpiece coordinates or in machine coordinates and regardless of the freeform surface that is to be machined the tool path is generated from 6 splines when the support points are defined in workpiece coordinates and are [sic] generated from 5 splines when the support points are defined in machine coordinates, with an independent spline being produced for each coordinate.

2. A method according to claim 1, **characterised in that** for each tool path the interpolation parameters are the same for all the splines of the respective tool path so that all the splines of a respective tool path are synchronized.

3. A device for milling freeform surfaces on workpieces, in particular a 5-axis milling device, wherein a tool mills a workpiece in such a way that a desired freeform surface results, having a programming device (21) for programming at least one tool path or mill path and having at least one control device (28) for controlling the movement of the tool along a tool path that is defined by splines relative to the workpiece, **characterised in that** the programming device (21) is formed as a CAD/CAM system and the means (25) associated with the programming device (21) calculate the splines in such a way from support points stored in the CAD/CAM system in workpiece coordinates or machine coordinates that the means (25), regardless of the freeform surface to be machined, generate the tool path from 6 splines when the support points are defined in workpiece coordinates and generate it from 5 splines when the support points are defined in machine coordinates, with an independent spline being produced for each coordinate and the CAD/CAM system producing at least one APT file (22) which can be conveyed from at least one downstream postprocessor (26) into at least one control file (27) that can be executed by the or each control device (28), and with the or each control device (28) controlling the movement of the tool along the or each tool path on the basis of the corresponding splines.

4. A device according to claim 3, **characterised in that** the means (25) associated with the programming device (21) transfer the splines to an APT processor (23) which transfers these splines to the or each postprocessor (26), with the or each postprocessor (26) providing the splines for the or each control device (28) in polynomial format.

## Revendications

1. Procédé pour fraiser des surfaces de forme libre sur des pièces, au moyen d'un dispositif de fraisage ou d'une fraiseuse, notamment une fraiseuse 5 axes, la pièce étant fraisée par un outil de la fraiseuse de manière à donner une surface de forme libre, par déplacement de l'outil de fraisage par rapport à la pièce, le long d'une trajectoire, définie par des splines
**caractérisé en ce que**
les splines sont calculés dans un système CAO/CFAO à partir de points d'appui enregistrés dans les coordonnées de la pièce ou celles de la machine et la trajectoire est, indépendamment de la surface de forme libre à usiner, générée à partir de 6 splines si les points d'appui sont définis dans les coordonnées de la pièce et à partir de 5 splines si les point d'appui sont définis dans les coordonnées de la machine, un spline indépendant étant produit pour chaque coordonnée.

2. Procédé selon la revendication 1,
**caractérisé en ce que**
pour chaque trajectoire, les paramètres d'interpolation sont les mêmes pour tous les splines de chaque trajectoire, de sorte que tous les splines sont synchronisés.

3. Dispositif pour fraiser des surfaces de forme libre sur des pièces, notamment au moyen d'un dispositif 5 axes, selon lequel un outil fraise une pièce de manière à obtenir la surface de forme libre désirée, en utilisant un dispositif de programmation (21) pour programmer au moins une trajectoire d'outil ou une trajectoire de fraise ainsi qu'au moins un dispositif de commande (28) pour commander le déplacement de l'outil par rapport à la pièce, le long de la trajectoire, définie par des splines,
**caractérisé en ce que**
le dispositif de programmation (21) est un système CAO/FAO, et les moyens (25) associés au dispositif de programmation (21) calculent les splines à partir des points d'appui dont les coordonnées de la pièce ou de la machine sont enregistrées dans le système CAO/FAO, ces moyens (25) générant, indépendamment de la surface de forme libre à usiner, la trajectoire à partir de 6 splines si les points d'appui sont définis dans les coordonnées de la pièce et de 5 splines s'ils sont définis dans les coordonnées de la machine, avec production d'un spline indépendant pour chaque coordonnée et production par le système CAO/FAO d'un fichier APT (22) qui peut, par un postprocesseur (26) monté en aval, être transmis à au moins un fichier de commande (27) réalisable par le ou par chaque dispositif de commande (28), de sorte que celui-ci commande le déplacement de l'outil le long de la ou de chaque trajectoire sur la base du spline correspondant.

4. Dispositif selon la revendication 3,
**caractérisé en ce que**
les moyens (25) associés au dispositif de programmation (21) transmettent les splines à un processeur APT (23) qui lui-même les transmet au ou à chaque postprocesseur (26) lequel met les splines à disposition du ou de chaque dispositif de commande (28) en format de polynôme.
